# EUROPEAN PATENT APPLICATION

(11) **EP 3 945 622 A1**
(43) Date of publication of application: **02.02.2022**
(21) Application number: 20188846.8
(22) Date of filing: 31.07.2020
(51) Int. Cl.: H01M 10/42

(54) **METHOD FOR INITIATING SIDE WALL RUPTURE OF LI-ION CELLS**

(71) Applicant: Rolls-Royce Deutschland Ltd & Co KG, 15827 Blankenfelde-Mahlow (DE)
(72) Inventor: ÖRÖKÖS-TÓTH, István, 15827 Blankenfelde-Mahlow (DE); PETHES, Rita, 15827 Blankenfelde-Mahlow (DE); VERES-SZEKELY, Vidor, 15827 Blankenfelde-Mahlow (DE)

(57) **Abstract**

Disclosed is a method of initiating side wall rupture of a battery cell. The method comprises providing a battery cell, providing a force application machine and striking the battery cell. The battery cell includes a positive terminal at a first end, a negative terminal at a second end, and a side wall between the positive terminal and the negative terminal. The positive terminal and/or the negative terminal include a vent arrangement. The force application machine is equipped with a battery cell striking element. The force application machine is used to strike the element into the battery cell. The step of striking the element into the battery cell includes striking the element into an end of the cell, with a force sufficient to pierce through the cell casing, thereby at least partially obstructing the vent arrangement, so as to precipitate side wall rupture of the battery cell.

## Description

### TECHNICAL FIELD

The present disclosure relates generally to battery cells, particularly to Lithium-ion (Li-Ion) cells; more specifically, the present disclosure relates to a method for (namely method of) initiating a side wall rupture of a Li-Ion cell for testing purposes.

### BACKGROUND

With advancements of contemporary technology, a use of clean, remote, reliable and affordable electrical sources, such as batteries, has become an integral feature of many electronic and electrical apparatus. Batteries are widely used in aircrafts, automobiles, electric cars, and portable electronic devices such as mobile phones and computers. For example, in aircrafts, all the electronic and electric components generally need some form of battery to provide electrical power for their operation. Similarly, batteries are used in automobile vehicles to provide power to the constituent electronic and electrical components. A typical battery includes a plurality of cells, generally, closely packed together to provide combined power sufficient to power the required electronic and electrical components.

Li-ion batteries have become a primary choice for applications that require rechargeable batteries. Compared with previous rechargeable types of batteries, such as lead-acid batteries, Li-ion batteries have a higher specific capacity, energy density, and power density. These advantages allow Li-ion batteries to support long-term operation and high-current usage, which are required by many contemporary portable electronic devices, including cell phones, computers, and electric vehicles. However, Li-ion batteries present safety concerns. If a given Li-ion battery is short-circuited or exposed to high temperature, active materials within the given lithium-ion battery break down exothermically, generating large amounts of heat, and resulting in a self-perpetuating increasing temperature loop known as "thermal runaway" that can lead to fires and explosions in respect of the given Li-ion battery.

Although possible damage arising from a failure of a single cell in a Li-ion battery pack is generally low, there arises a risk of cell failure within a battery pack becoming significant, such as batteries used in an electric vehicle (EV) where hundreds or even thousands of cells are encased in a pack. In particular, an occurrence of a single cell undergoing thermal runaway can cause cell-to-cell propagation of a thermal runaway and a corresponding hazardous destruction of an entire system can occur. There have been many reported incidents of Li-ion batteries catching fire and exploding. Regardless of whether a single cell or multiple cells are susceptible to undergoing this phenomenon, if the initial fire is not prevented, subsequent fires may be caused that dramatically expand a degree of system damage that can arise, wherein the system damage can even lead to bodily harm or loss of life in some situations.

To prevent thermal runaway, most of the battery cells are designed to release internal pressure in a controlled manner. A common approach is to provide a pressure relief mechanism, or vent arrangement, which releases gases from the cell when the internal pressure exceeds a predetermined magnitude. But sometimes, even such a vent arrangement may not be able to control a release of gases from inside the cell, due to a blockage arising or some other factors. Therefore, there arises a need of some reliable testing mechanism for the cells, and the formed battery packs, to understand their ability to withstand thermal runaway in a case of a blocked vent arrangement arising. Such testing could be used to evaluate the safety measure of a battery pack assembled from for example Li-ion cells against the side wall rupture and thermal runaway propagation to adjacent cells.

Current testing methods typically include using an external heater to heat cells into thermal runaway. However, such testing method may not provide reliable results as it may not be possible to heat the cell uniformly/consistently every time. Other testing methods employ X-ray radiography and computed tomography (CT) to noninvasively inspect internal architectures of materials and devices. Herein, time-lapse X-ray imaging can be used to track the evolution of materials (gases) as they change over time inside the cells. Such testing methods are complex and require expensive equipment and trained personnel, which may not always be feasible.

Therefore, in light of the foregoing discussion, there exists a need to overcome various problems associated with the testing mechanisms involving initiating side wall rupture of a Li-Ion cell, as known in the art.

### SUMMARY

The present disclosure seeks to provide an improved method of (namely, improved method for) initiating side wall rupture of a battery cell, and specifically addresses problems related to testing methods for Li-Ion cells with vent arrangements to withstand thermal runaway. An aim of the present disclosure is to provide a solution that overcomes at least partially the problems encountered in prior art, and provides a method of (namely a method for) initiating side wall rupture of a battery cell that tests the side wall rupture of the battery cell in an efficient manner.

In one aspect, the present disclosure provides a method for (namely a method of) initiating side wall rupture of a battery cell, comprising steps of:
Providing a battery cell, the battery cell having a positive terminal at a first end, the battery cell having a negative terminal at a second end, and a side wall between the positive terminal and the negative terminal, wherein the positive terminal and/or the negative terminal comprises a vent arrangement, the method being characterized by,
Providing a force application machine equipped with a battery cell striking element,
Using the force application machine to strike an element into the battery cell,
Wherein the step of striking the element into the battery cell includes striking the element into an end of the cell, with a force sufficient to pierce through the cell casing, thereby at least partially obstructing the vent arrangement, so as to precipitate side wall rupture of the battery cell.

Embodiments of the present disclosure substantially eliminate, or at least partially address, the aforementioned problems in the prior art, and enable a method of initiating side wall rupture of a battery cell.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1: is a diagrammatic illustration of an exemplary battery cell having a positive terminal at a first end and a negative terminal at a second end thereof, in accordance with an embodiment of the present disclosure;
- FIG. 2: is a diagrammatic illustration of a battery pack having a plurality of battery cells, in accordance with an embodiment of the present disclosure;
- FIG. 3A: is a diagrammatic cross-section illustration of a battery cell including a vent arrangement in a positive terminal therein, in accordance with an embodiment of the present disclosure;
- FIG. 3B: is a diagrammatic cross-section illustration of a battery cell including a vent arrangement in a positive terminal and a vent arrangement in a negative terminal therein, in accordance with another embodiment of the present disclosure;
- FIG. 3C: is a diagrammatic cross-section illustration of a battery cell including a vent arrangement in a positive terminal and a vent arrangement in a negative terminal therein, in accordance with yet another embodiment of the present disclosure;
- FIG. 4A: is a diagrammatic top view illustration of the battery cell with the vent arrangement therein, in accordance with an embodiment of the present disclosure;
- FIG. 4B: is a diagrammatic top view illustration of the battery cell with an element struck into the vent arrangement therein, in accordance with an embodiment of the present disclosure;
- FIG. 5: is a schematic depiction of a testing arrangement with a force application machine being used to strike the element into the battery cell, in accordance with an embodiment of the present disclosure;
- FIG. 6: is a schematic depiction of a testing arrangement with the vent arrangement in the positive terminal being struck by a first striking element and the vent arrangement in the negative terminal being struck by a second striking element, in accordance with another embodiment of the present disclosure.
- FIG. 7: is a diagrammatic cross-section illustration of the battery cell of FIG. 3A with an element struck into a vent arrangement in the positive terminal therein, in accordance with an embodiment of the present disclosure;
- FIG. 8: is a diagrammatic cross-section illustration of the battery cell of FIG. 3B with an element struck into a vent arrangement in the positive terminal as well as a vent arrangement in the negative terminal therein, in accordance with an embodiment of the present disclosure; and
- FIG. 9: is a diagrammatic cross-section illustration of the battery cell of FIG. 3C with an element struck into a vent arrangement in the positive terminal as well as a vent arrangement in the negative terminal therein, in accordance with another embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, the present disclosure provides a method of (namely, a method for) initiating side wall rupture of a battery cell, comprising the steps of:
Providing a battery cell, the battery cell having a positive terminal at a first end, the Li-Ion cell having a negative terminal at a second end, and a side wall between the positive terminal and the negative terminal, wherein the positive terminal and/or the negative terminal comprises a vent arrangement, the method being characterized by,
Providing a force application machine equipped with a battery cell striking element,
Using the force application machine to strike an element into the battery cell,
Wherein the step of striking the element into the battery cell includes striking the element into an end of the cell, with a force sufficient to pierce through the cell casing, thereby at least partially obstructing the vent arrangement, so as to precipitate side wall rupture of the battery cell.

The present disclosure provides a method for initiating a side wall rupture in a battery cell. The exemplary embodiments of the invention are described with respect to a Lithium-Ion (Li-Ion) battery cell. As used herein, the term "battery cell" relates to any device or structure which stores, produces or generates electrical energy such as, by way of example, a chemical reaction. Although the present disclosure has been described in terms of "Li-Ion cell", it will be appreciated that the teachings of the present disclosure may be applied to any type of cell, such as, but not limited to, Nickel-Cadmium (NiCd), Lead-Acid, Nickel-Metal Hydride (NiMH), and the like. For the purposes of the present disclosure, hereinafter, the "Li-Ion cell" has been, sometimes, simply referred to as "cell," without any limitations.

Unlike conventional cells, Li-Ion cells have higher energy density and power density. Hence, a larger amount of electrical current and voltage can be drawn through it. This makes it apt for a number of applications. The Li-Ion cell may be used as a single cell battery or as a component cell in a multi-cell system. In the multi-cell system, the Li-Ion cells may or may not be interconnected with each other, but typically form a system such as a battery, also known as a battery pack or a battery module. In the battery, a plurality of Li-Ion cells are closely packed together. Although the term "battery" technically may more properly define a combination of two or more cells, it has come to be used popularly to even refer to a single cell. Thus, the term battery by itself is sometimes used herein for convenience of explanation to refer to what is actually a single cell. The teachings herein that are applicable to a single cell are applicable equally to each cell of a battery containing multiple cells.

The method of initiating side wall rupture of a battery cell comprises providing a battery cell, the battery cell having a positive terminal at a first end, the battery cell having a negative terminal at a second end, and a side wall between the positive terminal and the negative terminal, wherein the positive terminal and/or the negative terminal comprises a vent arrangement. The battery cell may be designed as a Li-Ion battery cell.

Generally, the battey cell includes a positive electrode (cathode), a negative electrode (anode), a separator and an electrolyte. The positive electrode is composed of Lithium or its compound, and the negative electrode is traditionally composed of graphite. During charging, the lithium ions move from the positive electrode to the negative electrode through the electrolyte. The process is opposite when the battery discharges. That is, during discharging process, the lithium ions move from the negative electrode to the positive electrode through the electrolyte. The whole setup of the Li-Ion cell including the positive electrode, the negative electrode, the separator and the electrolyte is encompassed inside a casing. The casing is typically in a form of a metal container with a side wall forming a closed structure. In some examples, when used as a single cell battery, the Li-Ion cell may include a jacket, sometimes in the form of a heat-shrinkable adhesive label, disposed over the side wall of the casing. The ends of the casing, including the first end and the second end, are closed. Herein, the side wall extends between the first end and the second end to enclose the setup of the Li-Ion cell. Herein, the positive electrode of the Li-Ion cell is connected to the first end of the Li-Ion cell and forms the positive terminal. Similarly, the negative electrode of the Li-Ion cell is connected to the second end of the Li-Ion cell and forms the negative terminal.

The separator is made of a porous insulating film such as, but not limited to, paper, gel or polymer and is placed between the positive electrode and the negative electrode. The pores in the separator absorb the electrolyte and provides a path for the lithium ions generated in the electrochemical reaction taking place inside the battery. The insulating nature of the separator prevents any direct contact between the electrodes, and hence prevents a short circuit arising. If the temperature of the cell increases to a melting point of the separator, the pores of the separator may be blocked, and the separator is said to be in a shutdown process. Hence, the lithium ions are not able to pass through the separator and the electrochemical reaction taking place inside the cell stops. Thus, the battery starts to cool down and the thermal runaway may be prevented. However, the separator may work only up to a certain temperature, beyond which the separator may shrink or may melt.

As aforementioned, if a given Li-ion battery is short-circuited or exposed to high temperature, active materials within the given lithium-ion battery break down exothermically, generating large amounts of heat, and resulting in a self-perpetuating increasing temperature loop known as "thermal runaway" that can lead to fires and explosions in respect of the given Li-ion battery. The thermal runaway is described in various ways, but it usually refers to an "uncontrollable increase in temperature", a "sudden voltage drop", the cell "becoming unusable" afterwards. In certain cases, gases flames and heat are also released during thermal runaway, wherein the flames and heat potentially result in thermal runaway propagation, which is a cascading of a thermal runaway event from one cell to the next, until the thermal runaway fully consumes the battery pack.

In order to combat thermal runway, the battery cell includes the vent arrangement. The vent arrangement may be provided at the positive terminal and/or the negative terminal (as discussed later in more detail). The vent arrangement helps to release gases (generated due to chemical reactions) from inside of the casing of the cell in a controlled manner if the internal pressure increases above a predefined limit. The limit is defined such that the vent arrangement will open before the side wall of the battery cell may rupture. Generally, the vent arrangement includes a support disk spaced apart from the corresponding end of the casing of the battery cell, forming a head space therebetween. Such a support disk may have a central opening and a peripheral edge, with a plurality of spaced apart vents (in the form of apertures) located at the peripheral edge. Generally, the plurality of vents are spaced apart in a circumferential pattern. The pressurized gases from the interior of the cell may enter the vent arrangement through the central opening in the support disk and be released from the cell via the plurality of vents therein. Specifically, each of the vents in the vent arrangement may be provided with rupturable membrane, and when gas pressure within the cell rises to the predefined level the membrane ruptures allowing gases from the cell interior to pass into the head space of the vent arrangement and then to the external environment through the vents.

During thermal runaway, there is a likeliness that the accumulated gases and a considerable amount of heat of the cell is emitted into the environment. If the vent arrangement is not obstructed, it can effectively reduce the internal pressure and temperature of the cell in a controlled manner and hence reducing a risk of side wall rupture, and thus the possible thermal runaway propagation is prevented. However, for effective operation of the vent arrangement, the vents therein must not be clogged. Clogged vents provide an insufficient path for the accumulated hot gases and hence, due to pressure build-up, thermal runaway may occur that ultimately results in the side wall rupture in the Li-Ion cell. Furthermore, it should be noted that when the cell undergoes thermal runaway and releases the gases in a controlled fashion using the intended vent arrangement, the side wall may still become ruptured due to the size of the vent, the material characteristics of the side wall, and the flow of hot gas travelling along the side wall as it rushes towards the ruptured vent.

As aforementioned, once the side wall is compromised, i.e., ruptured, collateral damage can quickly escalate, due both to the unpredictable manner in which such side wall rupture may grow and affect neighbouring cells in a battery. For example, if the cell is a part of a battery pack having a large array of such cells, the jet of hot gas escaping the side wall may heat the adjacent cell to above its critical temperature, causing the adjacent cell to enter into thermal runaway as well. Thus, it may be understood that the perforation of the wall of one cell during thermal runaway can initiate a cascading reaction that can spread throughout the battery. Furthermore, even if the jet of hot gas escaping the cell perforation from the first cell does not initiate thermal runaway in the adjacent cell, it may still affect the health of the adjacent cell, for example by weakening the adjacent cell wall, thereby making the adjacent cell more susceptible to future failure. It may be appreciated that the present method of initiating side wall rupture of the Li-Ion cell purposely tries to induce side wall rupture to check whether the Li-Ion cell can deter side wall rupture or not when the vent arrangement is blocked.

The method also comprises providing a force application machine equipped with a battery cell striking element (hereinafter, sometimes, referred to as "striking element" or simply "element"). The method further comprises using the force application machine to strike the element into the battery cell. As aforementioned, the present method of testing the battery cell works on the principle of trying to induce side wall rupture to check whether the battery cell can deter side wall rupture or not. In order to provide conditions for inducing side wall rupture, the vent arrangement needs to be blocked. For this purpose, the force application machine equipped with the battery cell striking element is used. The force application machine moves the striking element with some force in order to strike the striking element into the battery cell such that the vent arrangement is at least partially obstructed.

In the present method, the step of striking the element into the battery cell includes striking the element into an end of the cell, with a force sufficient to pierce through the cell casing, thereby at least partially obstructing the vent arrangement, so as to precipitate side wall rupture of the battery cell. As discussed, the present method purposely tries to induce side wall rupture to check whether the battery cell can deter side wall rupture or not when the vent arrangement is blocked. Since, as aforementioned, the vent arrangement is provided at the positive terminal and/or the negative terminal, i.e. at the first end and/or the second end; therefore, the striking element is forced through the corresponding end(s) to at least partially obstruct the vent arrangement(s) therein, and thereby tries to simulate the required conditions for initiating the side wall rupture for testing of the battery cell. Specifically, the at least partial obstruction of the vent arrangement induces thermal runway and thereby provides conditions for testing whether the side wall ruptures in the battery cell or not.

Optionally, the positive terminal of the battery cell comprises the vent arrangement, and the method comprises striking the element into the positive terminal, thereby at least partially obstructing the vent arrangement therein. Generally, the positive terminal is in the form of an end cap extending over the vent arrangement. The positive terminal, typically, has a protruding nubbin. The nubbin provides an open space into which the vent arrangement can open without interference from adjacent cells in the battery. The positive terminal may be affixed with welds or by other means to the casing of the battery cell, to be in physical and electrical contact therewith. Herein, the welds are positioned on a peripheral flange of the positive terminal, close to an upstanding wall of the nubbin, to minimize any constraint by the positive terminal on bulging of the casing when pressure builds up inside the cell. The positive terminal not only provides an electrical contact surface, but it also protects the vent arrangement from damage.

It will be appreciated that if the positive terminal of the battery cell has the vent arrangement, then the striking element is conveniently arranged to strike at the first end of the battery cell so as to obstruct the vent arrangement therein. This is achieved by relatively arranging the force application machine equipped with the striking element and the battery cell such that the striking element faces the positive terminal of the battery cell. That is, if the striking element strikes the cell from above, the cell should be arranged vertically so that the positive terminal is located upwards and is in-line with the striking element. Conversely, if the striking element strikes the cell from below, the cell is conveniently arranged vertically so that the positive terminal is located downwards and is in-line with the striking element.

Optionally, the negative terminal of the battery cell comprises the vent arrangement, and the method comprises striking the element into the negative terminal, thereby at least partially obstructing the vent arrangement therein. Generally, the negative terminal is in a form of a flat cover arranged at the second end of the casing, over the vent arrangement. The negative terminal is usually designed such that the vent arrangement must be able to open sufficiently without interference from the flat cover of the negative terminal, to relieve internal cell pressure within the required time. The vent arrangement in the negative terminal generally has the same effect and can provide the same advantages as described above when the vent arrangement is arranged at the positive terminal at the first end of the casing.

Again, it will be appreciated that if the negative terminal of the battery cell has the vent arrangement, then the striking element is conveniently arranged to strike at the second end of the battery cell so as to obstruct the vent arrangement therein. Such an obstruction is achieved by relatively arranging the force application machine equipped with the striking element and the battery cell such that the striking element faces the negative terminal of the battery cell. That is, if the striking element strikes the cell from above, the cell is conveniently arranged vertically so that the negative terminal is located upwards and is in-line with the striking element. Conversely, if the striking element strikes the cell from below, the cell should be arranged vertically so that the negative terminal is located downwards and is in-line with the striking element.

In an embodiment, the positive terminal and the negative terminal each comprise a vent arrangement. That is, in some cases, the battery cell is provided with a separate vent arrangement at both the first end and the second end of the casing therein. This may be done in order to provide better venting conditions for release of gases from inside of the cell. In one example, both the positive terminal and the negative terminal may have the same design for accommodating the vent arrangement therein. In other examples, the positive terminal and the negative terminal may have different designs in view of the overall shape of the cell while accommodating the vent arrangement therein, without departing from the spirit and the scope of the present disclosure.

In the present embodiment, the method comprises striking the element through the positive terminal and the negative terminal, thereby at least partially obstructing the vent arrangement in the positive terminal and the vent arrangement in the negative terminal. As will be appreciated from the foregoing, in order to induce the side wall rupture, all the vent arrangements in the battery cell have to be obstructed at least partially. If both the vent arrangements are not obstructed, then the side wall rupture may not be induced. For example, if the vent arrangement in the positive terminal is blocked and the vent arrangement in the negative terminal is not blocked, then, during thermal runaway, there is a likeliness that the accumulated gases and a considerable amount of heat of the cell are emitted into the environment through the vent arrangement in the negative terminal, and hence the side wall rupture, and the resulting thermal runaway propagation is prevented. Therefore, with both the positive terminal and the negative terminal having the vent arrangement, the striking element is struck in a manner that both the vent arrangement in the positive terminal and the vent arrangement in the negative terminal are at least partially obstructed. In one example, the striking element strikes the battery cell from the positive terminal at the first end, enters the casing and exits from the negative terminal at the second end, thereby obstructing both the vent arrangements at least partially. In another example, the striking element strikes the battery cell from the negative terminal at the second end, enters the casing and exits from the positive terminal at the first end, thereby obstructing both the vent arrangements at least partially.

Alternatively, in the present embodiment, the method comprises striking a first element through the positive terminal thereby at least partially obstructing the vent arrangement therein, and striking a second element through the negative terminal thereby at least partially obstructing the vent arrangement therein. That is, instead of using a single striking element to strike through the casing of the cell to obstruct both the vent arrangements, two separate striking elements are employed to strike both the vent arrangement individually. The first element is positioned so as to strike the positive terminal of the cell in order to obstruct the vent arrangement therein, and similarly, the second element may be positioned so as to strike the negative terminal of the cell in order to block the vent arrangement therein. It will be appreciated that in order to achieve this, the cell may need to be held or suspended by some clamping arrangement or the like. Herein, in one example, the first element may be part of a first force application machine and the second element may be part of a second force application machine. In another example, both the first element and the second element may be part of a single force application machine with each striking element, for example, attached to one of the two movable parts or even a single movable part (such as hydraulic cylinder(s), as elucidated in the subsequent paragraph) of the force application machine.

Optionally, the force application machine comprises a hydraulic cylinder. Herein, the force application machine may be in a form of a hydraulic press as known in the art. Such machine, typically, includes a tank with viscous fluid connected to the hydraulic cylinder via a pump. The hydraulic cylinder may be a double-acting cylinder with a piston, defining a first chamber and a second chamber therein. When the fluid is pumped into, for instance, the first chamber of hydraulic cylinder, the piston moves downwards causing the striking element attached thereto also to move downwards with some force; and vice-versa. This mechanism may be utilized to strike the element into the battery cell. It will be appreciated that when the force application machine has two separate striking elements, such as the first element and the second element, the associated single hydraulic cylinder may be able to provide linear movements to both the striking elements by using a hydraulic circuit which may divide the force due to, for example, downward movement of the piston into two hydraulic lines with corresponding movable parts to which the respective striking elements may be attached. Such hydraulic circuit can be contemplated by a person skilled in the art and thus has not been described herein in detail for the brevity of the present disclosure.

Optionally, the method comprises providing the striking element in the form of a nail. As discussed, the striking element is used to strike the battery cell. It is required that the striking element punctures through and pierces into the battery cell. To achieve that, the striking element needs to have a pointed end. Nail, or similarly shaped element, is apt for this purpose as its pointed end may efficiently pierce into the battery cell. Herein, head of the nail (i.e. non-pointed end) may be connected to the movable part, such as the piston of the hydraulic cylinder, of the force application machine. Thus, when the force application machine is activated, and the movable part therein moves linearly, the striking element also moves along therewith with a certain speed and a certain fo rce.

Optionally, the maximum speed and force of the striking element is limited in order to puncture the battery cell in a controllable manner. It will be understood that if the Li-Ion cell is struck too hard, the cell may burst to result in fire. That is, if the striking element strikes the battery cell with considerably high speed and force, the striking element may not just pass through one or more terminals to obstruct the vent arrangement(s) therein but may crush the casing of the battery cell, which may burst as a result. This may lead to the wasted effort as the cell could not be studied for testing side wall rupture. Furthermore, this may possibly cause injury to the operator of the force application machine. Conversely, it will be understood that if the striking element strikes the battery cell with too little speed and/or force, the striking element may simply not be able to pierce through the terminal and obstruct the vent arrangement(s), again leading to wasted effort. Hence, in order to puncture the casing of the battery cell in a controlled manner, the maximum speed and the maximum force of the striking element is limited depending on the design and structure of the cell, and the like.

Optionally, the depth the striking element penetrates into the battery cell is limited to less than the distance between the positive and negative terminals, preferably about 2/3 of the distance, so as to limit energy usage. Since in order to obstruct vent arrangement, the striking element has to penetrate into the battery cell up to a certain depth; it may be understood, the larger the depth, the higher is the energy consumed to provide the sufficient speed and force to the striking element to achieve penetration up to the required depth. Moreover, in case of there being only one vent arrangement at one of the terminals, the depth to which the striking element has to penetrate does not need to be greater than the distance between the positive terminal and the negative terminal. In order to use energy optimally, the depth to which the striking element penetrates is determined to be about two-thirds of the total distance between the positive terminal and the negative terminal. This is done, since, when the striking elements penetrate up to two-third of the total distance between the positive terminal and the negative terminal, if the side wall rupture has to be initiated in the battery cell, it will be induced, while the energy used will be limited. In such a case, the positive terminal includes the vent arrangement, the striking element penetrates through the positive terminal up to about two-thirds of the distance between the positive terminal and the negative terminal; and vice-versa. In such a case, each of the positive terminal and the negative terminal includes the vent arrangement, the first element and the second element may penetrate only up to half the distance between the positive terminal and the negative terminal. Alternatively, in such a case, the first element and the second element may be struck out-of-line from each other and each may penetrate up to about two-thirds of the distance between the positive terminal and the negative terminal.

Optionally, the striking element is sufficiently rigid so as to not to deform substantially during striking or penetration. As will be understood, the striking element may have to strike the battery cell with substantial force in order to penetrate and pass through the terminal into the casing, thereby obstructing the vent arrangement therein. Hence, the striking element needs to be rigid, otherwise it may deform during such striking or penetration process. In one or more examples, the striking element is formed of alloy steels combined with other metallic elements in order to make the striking element sufficiently rigid. In an example, the striking element is formed of chrome vanadium steel. In another example, the striking element is formed of tungsten carbide. Furthermore, the striking element may be manufactured using cold rolling and/or drop-forging techniques, which may further enhance its rigidity.

Optionally, the vent arrangement comprises a plurality of vents, partly defined by vent casing, and the method comprises striking the element through the vent casing. As discussed in the preceding paragraphs, the plurality of vents in the vent arrangement are generally spaced apart and may be provided with a rupturable membrane, and when gas pressure within the cell rises to the predefined level the membrane ruptures allowing gases from the cell interior to exit to the external environment through thereof. Herein, the vent casing may be defined by the support disk and the associated walls extending therefrom to be attached to the respective terminal of the battery cell. So, in order to obstruct the vent arrangement, as required for testing the battery cell as per the embodiments of the present disclosure, the striking element is struck such that it penetrates, at least partially, through the vent casing. This would lead to the side walls of the striking element blocking the vents, and thus stopping the flow of gases therethrough. It will be appreciated that a small amount (in a range about 10% to 20%) of the gas might escape through the vents from the side walls of the striking element, but there may still be enough pressurized gas left inside the casing possibly to initiate the side wall rupture.

Optionally, a line joining the plurality of vents defines an area, and the method comprises striking the element inside or on the circumference of the area, so as to obstruct the vent arrangement. It will be appreciated that for the vent arrangement having the plurality of vents, the line joining the plurality of vents generally defines a peripheral shape (area) of the vent casing (as discussed above) of the vent arrangement. Moreover, as discussed, in order to obstruct the vent arrangement at least partially, the striking element should strike through the vent casing. Thus, correspondingly, the striking element has to be struck inside or on the circumference of the area, so as to effectively obstruct the vent arrangement. It will be appreciated that the shape of the said area is based on the placement of the plurality of vents, and in turn, may further be dependent on the shape of the battery cell. For example, if the battery cell is cylindrical in shape, the vent arrangement may expectedly be circular, and the line joining the plurality of vents may thus define a circular area, and hence, the striking element has to strike on or inside the circumference of the circular area so as to effectively obstruct the vent arrangement.

In an embodiment, the method comprises providing a first ratio of a characteristic diameter of the battery cell to an effective diameter of the vent area is in the range of 1 to 4, in particular 1 to 2, in particular 1.8. The characteristic diameter of non-circular surfaces may be achieved by substituting the non-circular surface area with an equivalent circular surface and calculating the corresponding diameter being the characteristic diameter. For example, the method comprises providing a cylindrical cell of about 18 mm diameter. Such diameter is commonly used and widely adopted for the Li-Ion cells used in most of the applications. Optionally, the method further comprises providing a vent area having an effective diameter of about 10 mm. Such an arrangement leads to a first ratio of the characteristic diameter of the cell to the effective diameter of the vent area of 1.8. As discussed, for the cylindrical cell, the plurality of the vents defines a circular area. With the cylindrical cell of about 18 mm diameter, the vent area is provided with the effective diameter of about 10 mm, such that a first ratio of 1.8 allows for sufficient flow of gases from the inside of the casing (of about 18 mm diameter) of the Li-Ion cell in a timely manner so as to avoid the possible side rupture and the thermal runaway propagation. Smaller ratios, that is increased vent areas, may lead to an insufficient stiffness of the casing. Larger ratios, that is reduced vent areas, may lead to an insufficient ability to rupture.

In a further embodiment, the method comprises that a second ratio of an effective diameter of the vent area to a diameter of the striking element is in the range of 1 to 5, in particular 2 to 3, in particular 2.5. For example, a striking element of about 4 mm diameter is provided. That is, in the present embodiment, with the effective diameter of the circular area being about 10 mm, the striking element is provided with the diameter of about 4 mm to be able to effectively obstruct the vent arrangement. It will be appreciated that using a striking element of lesser diameter, which leads to a reduced second ratio, may not effectively obstruct the vent arrangement and may lead to leakage of gases from sides thereof, and hence the inducement of the side wall rupture may not be achieved. Conversely, using a striking element of larger diameter, which leads to an increased second ratio, may lead to the crushing of the casing of the Li-Ion cell which is not desirable.

Optionally, the method comprises providing a cylindrical shaped cell, hexahedron shaped cell or a cuboid shaped cell. As will be appreciated, the battery cells are available in many shapes and sizes. In case, the Li-Ion cells being cylindrical in shape, i.e. the cell having a cylindrical casing with the first end and the second end being closed, the curved longitudinal wall of the cylindrical casing forms the side wall of the cell. The pressure build-up inside the such cylindrical cell will rupture the casing at the weakest point, which if there are no additional pressure relief vents on the cell, would be the cylindrical side wall of the cell. Some cylindrical cells are equipped with a bottom vent (a weakened portion at the bottom of the cell); in such cases, the side wall rupture initiation may only be induced if such bottom vent is also inhibited. In a case, the Li-Ion cells being hexahedron (i.e., a polygon having six faces and twelve edges) in shape, the largest free surface of the cell, which would typically be one or more of the side faces may form the side wall of the cell, and be used for induced side wall rupture. It will be appreciated that cubes and cuboids are hexahedrons, and thus the Li-Ion cells with such shapes could be used for the purposes of the present disclosure.

As discussed, the battery cells are prone to side wall rupture, particularly Li-Ion cells. This may cause a disastrous accident, for example, in electrical vehicles and aircrafts, such as e-aircrafts being developed, with hundreds or thousands of such cells closely packed together. The Li-Ion cells employed in batteries used in such application are required to satisfy safety standards. In a case of aircrafts, the safety is even more paramount, and each component of the aircraft has to follow stricter guidelines and certifications. The method of the present disclosure provides a simple, inexpensive and reliable testing technique to check whether the battery cell can deter side wall rupture or not when the vent arrangement thereof is blocked.

### DETAILED DESCRIPTION OF THE DRAWINGS

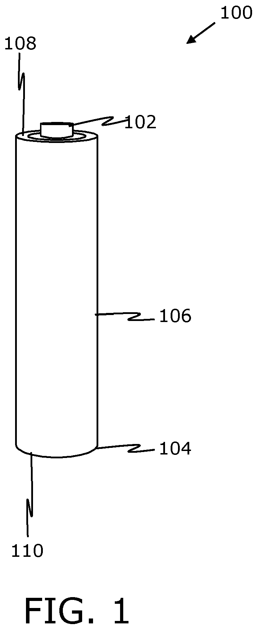

Referring to FIG. 1, there is shown a diagrammatic illustration of a Li-Ion cell **100,** in accordance with an embodiment of the present disclosure. In the illustrated example, the Li-Ion cell **100** is cylindrical in shape. The Li-Ion cell **100** includes a positive terminal **102,** a negative terminal **104** and a side wall **106.** The positive terminal **102** is at a first end **108** of the Li-Ion cell **100.** The negative terminal **104** is at a second end **110** of the Li-Ion cell **100.** The side wall **106** is extending between the positive terminal **102** and the negative terminal **104.** The positive terminal **102** and/or the negative terminal **104** comprises a vent arrangement (not visible in FIG. 1).

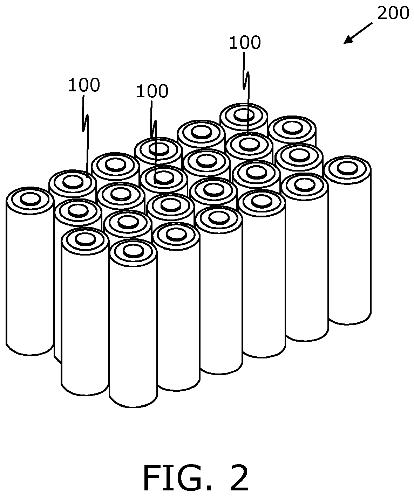

Referring to FIG. 2, there is shown a diagrammatic illustration of a battery pack **200** having a plurality of Li-Ion cells **100,** in accordance with an embodiment of the present disclosure. In the illustrated example, the battery pack **200** is shown to have eighteen cylindrical Li-Ion cells **100** arranged in three rows and six columns in order to form a cuboid-shaped battery.

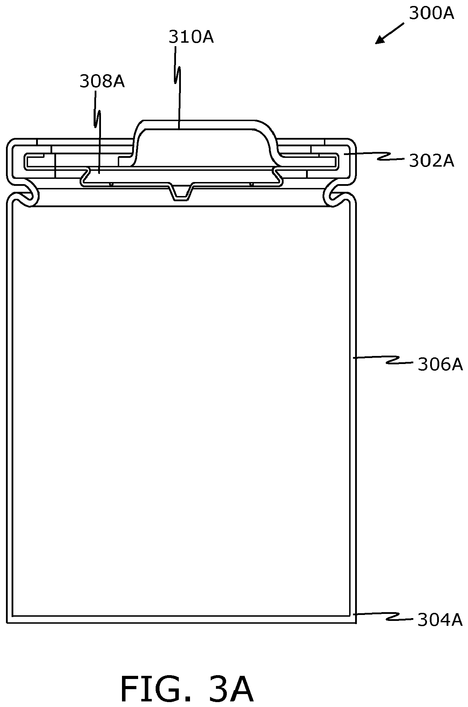

Referring to FIG. 3A, there is shown a diagrammatic cross-section illustration of a Li-Ion cell **300A,** in accordance with an embodiment of the present disclosure. Similar to the Li-Ion cell **100,** the Li-Ion cell **300A** includes a positive terminal **302A,** a negative terminal **304A** and a side wall **306A.** The Li-Ion cell **300A** further includes a vent arrangement **308A** in the positive terminal **302A.** The vent arrangement **308A** is covered by a vent casing **310A.**

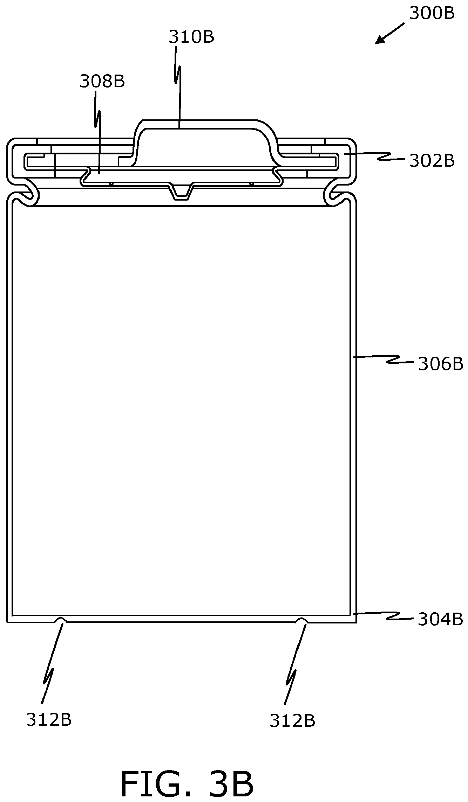

Referring to FIG. 3B, there is shown a diagrammatic cross-section illustration of a Li-Ion cell **300B,** in accordance with another embodiment of the present disclosure. Similar to the Li-Ion cell **100,** the Li-Ion cell **300B** includes a positive terminal **302B,** a negative terminal **304B** and a side wall **306B.** The Li-Ion cell **300B** further includes a vent arrangement **308B** in the positive terminal **302A.** The vent arrangement **308B** is covered by a vent casing **310B.** The Li-Ion cell **300B** further includes a vent arrangement **312B** in the negative terminal **304B.** The vent arrangement **312B** is formed by reducing thickness of casing at the negative terminal **304B** in a circular shape.

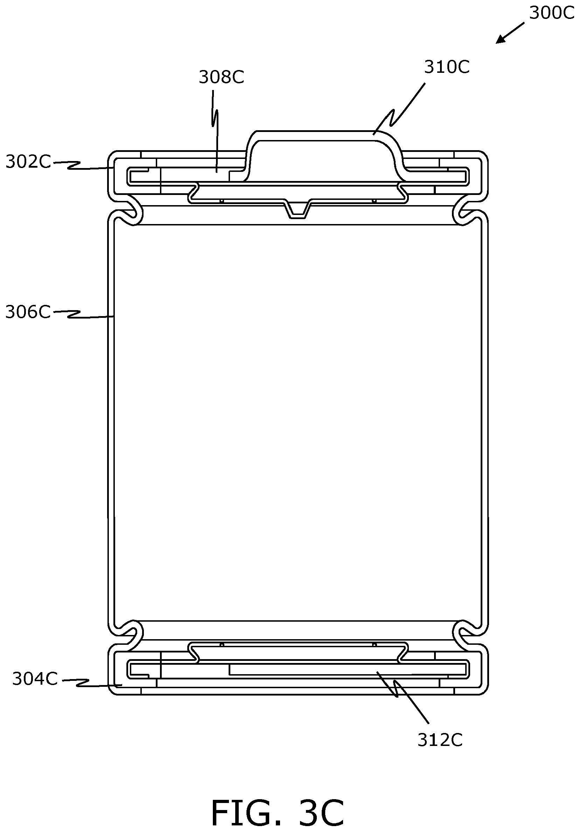

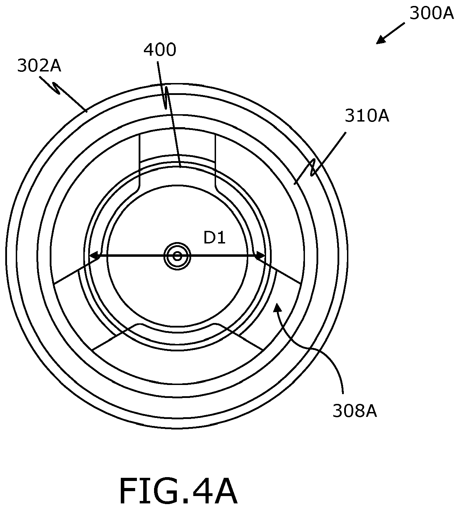

Referring to FIG. 3C, there is shown a diagrammatic cross-section illustration of the cylindrical Li-Ion cell **300C,** in accordance with yet another embodiment of the present disclosure. Similar to the Li-Ion cell **100,** the Li-Ion cell **300C** includes a positive terminal **302C,** a negative terminal **304C** and a side wall **306C.** The Li-Ion cell **300C** further includes a vent arrangement **308C** in the positive terminal **302C.** The vent arrangement **308C** is covered by a vent casing **310C.** The Li-Ion cell **300C** further includes a vent arrangement **312C** in the negative terminal **304C,** generally similar in shape to the vent arrangement **308C** in the positive terminal **302C** but without the vent casing **310C.** Referring to FIG. 4A, there is shown a diagrammatic top view illustration of the Li-Ion cell **300A** of FIG. 3A, in accordance with an embodiment of the present disclosure. As discussed, the Li-Ion cell **300A** includes the vent arrangement **308A** in the positive terminal **302A.** The vent arrangement **308A** includes a plurality of vents (not visible in FIG. 4A). The plurality of vents of the vent arrangement **308A** are joined by a line 400 to define an area of the vent casing **310A** of the vent arrangement **308A.** In the illustrated example, as shown, the line **400** defines a circular area. A diameter **D1** of the circular area defined by the line **400** is about 10 mm.

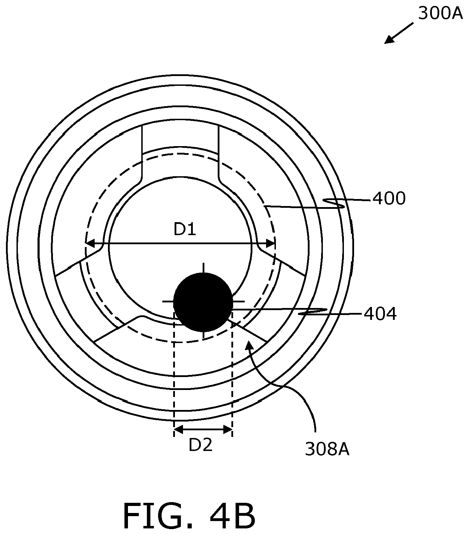

Referring to FIG. 4B, there is again shown a diagrammatic top view illustration of the Li-Ion cell **300A,** in accordance with an embodiment of the present disclosure. In the present illustration, the vent arrangement **308A** is shown to be struck with a striking element **404.** In order to initiate side wall rupture in the Li-Ion cell **300A,** the striking element **404** is struck inside or on the circumference of the area defined by the line **400,** so as to obstruct the vent arrangement **308A.** In order to obstruct the vent arrangement **308A** of the Li-Ion cell **300A** with the diameter **D1** of about 10 mm, the striking element **404** has a diameter **D2** of about 4 mm.

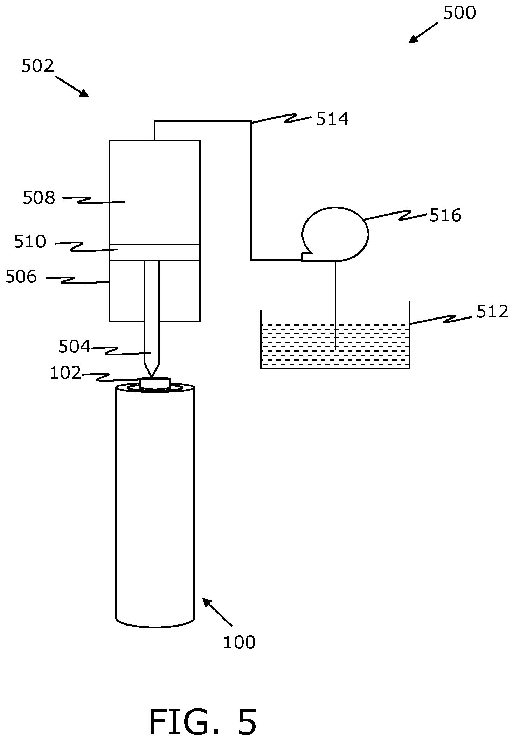

Referring to FIG. 5, there is shown a schematic depiction of a testing arrangement **500,** in accordance with an embodiment of the present disclosure. In the testing arrangement **500,** the Li-Ion cell **100** with the vent arrangement (not shown) in the positive terminal **102** is struck by using a force application machine **502** equipped with a Li-Ion cell striking element **504.** The force application machine **502** includes a hydraulic cylinder **506** with a chamber **508** and a piston **510** arranged therein. The striking element **504** is fixed to the piston **510.** The force application machine **502** also includes a tank **512** filled with viscous fluid, a pipe **514** connecting the chamber **508** of the hydraulic cylinder **506** with the tank **512,** a pump **516** for pumping the viscous fluid from the tank **512** to the chamber **508** of the hydraulic cylinder **506** via the pipe **514.** In order to obstruct the vent arrangement in the positive terminal **102** of the Li-Ion cell **100,** the striking element **504** strikes the vent arrangement in the positive terminal **102** with some force. To achieve this, the pump **516** pumps the viscous fluid from the tank **512** to the chamber **508** to push the piston **510** downwards and hence, the striking element **504** attached to the piston **510** moves linearly and hits the vent arrangement in the positive terminal **102.**

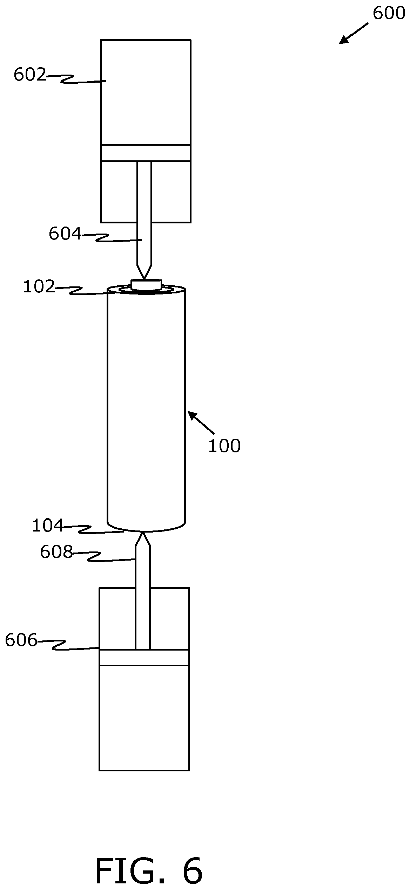

Referring to FIG. 6, there is shown a schematic depiction of a testing arrangement **600,** in accordance with another embodiment of the present disclosure. In the testing arrangement **600,** the Li-Ion cell **100** with the vent arrangement (not shown) in both the positive terminal **102** and the negative terminal **104** is struck by using a first force application machine **602** (similar to the force application machine **502)** equipped with a first element **604** (similar to the striking element **504)** and a second force application machine **606** (also similar to the force application machine **502)** equipped with a second element **608** (also similar to the striking element **504).** The vent arrangement in the positive terminal **102** is obstructed at least partially by the first element **604,** and the vent arrangement in the negative terminal **104** is obstructed at least partially by the second element **608.**

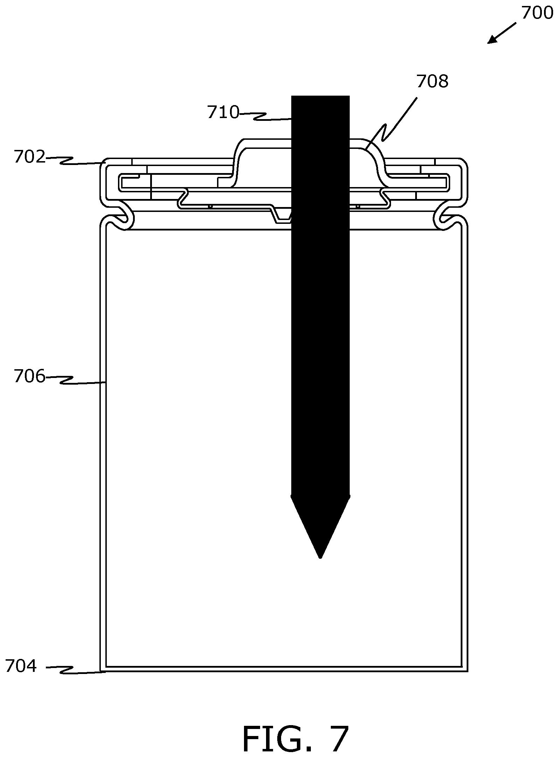

Referring to FIG. 7, there is shown a diagrammatic cross-section illustration of a Li-Ion cell **700** (similar to the Li-Ion cell **300A** of FIG. 3A), in accordance with an embodiment of the present disclosure. The Li-Ion cell **700** includes a positive terminal **702,** a negative terminal **704** and a side wall **706.** The Li-Ion cell **700** of FIG. 7 includes a vent arrangement **708** in the positive terminal **702.** A striking element **710** is employed to pierce the positive terminal **702.** As illustrated, the depth up to which the striking element **710** penetrates is about two-thirds of the total distance between the positive terminal **702** and the negative terminal **704.**

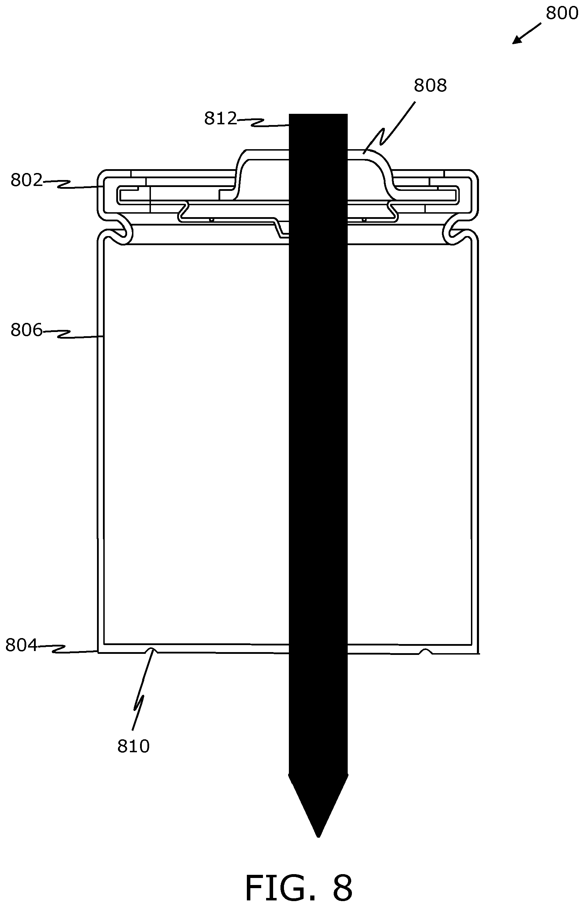

Referring to FIG. 8, there is shown a diagrammatic cross-section illustration of a Li-Ion cell **800** (similar to the Li-Ion cell **300B** of FIG. 3B), in accordance with an embodiment of the present disclosure. The Li-Ion cell **800** includes a positive terminal **802,** a negative terminal **804** and a side wall **806.** The Li-Ion cell **800** includes vent arrangements in both the positive terminal **802** and the negative terminal **804,** i.e. a first vent arrangement **808** in the positive terminal **802** and a second vent arrangement **810** in the negative terminal **804.** A striking element **812** is employed to pierce the Li-Ion cell **800** to pass through both the positive terminal **802** and the negative terminal **804.**

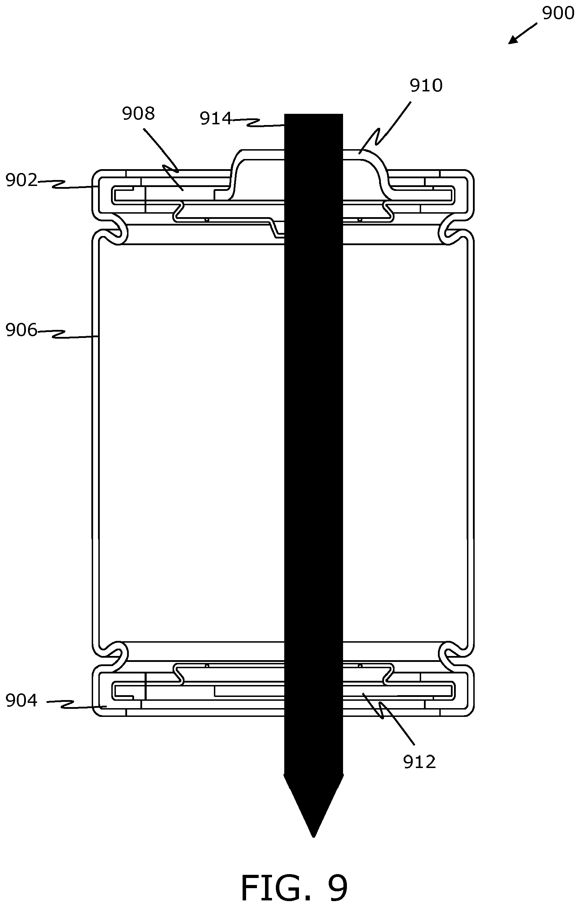

Referring to FIG. 9, there is shown a diagrammatic cross-section illustration of a Li-Ion cell **900** (similar to the Li-Ion cell **300C** of FIG. 3C), in accordance with an embodiment of the present disclosure. The Li-Ion cell **900** includes a positive terminal **902,** a negative terminal **904** and a side wall **906.** The Li-Ion cell **900** includes vent arrangements in both the positive terminal **902** and the negative terminal **904,** namely a first vent arrangement **908** with a vent casing **910** in the positive terminal **902** and a second vent arrangement **912** in the negative terminal **904.** A striking element **914** is employed to pierce the Li-Ion cell **900** to pass through both the positive terminal **902** at the vent casing **910** and the negative terminal **904.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method of initiating side wall rupture of a battery cell, in particular a Lithium-ion cell, wherein the method comprises steps of:
- Providing a battery cell, the battery cell having a positive terminal at a first end, the battery cell having a negative terminal at a second end, and a side wall between the positive terminal and the negative terminal, wherein the positive terminal and/or the negative terminal comprises a vent arrangement, the method being **characterized by**:
- Providing a force application machine equipped with a battery cell striking element,
- Using the force application machine to strike an element into the battery cell,
wherein the step of striking the element into the battery cell includes striking the element into an end of the cell, with a force sufficient to pierce through the cell casing, thereby at least partially obstructing the vent arrangement, so as to precipitate side wall rupture of the Li-Ion cell.

2. A method of initiating side wall rupture of a battery cell according to Claim 1, **characterized in that** the positive terminal comprises a vent arrangement, and the method comprises striking the element into the positive terminal, thereby at least partially obstructing the vent arrangement therein or **characterized in that** the negative terminal comprises a vent arrangement, and the method comprises striking the element into the negative terminal, thereby at least partially obstructing the vent arrangement therein.

3. A method of initiating side wall rupture of a battery cell according to Claim 1, **characterized in that** the positive terminal and the negative terminal each comprise a vent arrangement.

4. A method of initiating side wall rupture of a battery cell according to Claim 3, **characterized in that** the method comprises striking the element through the positive terminal and the negative terminal, thereby at least partially obstructing the vent arrangement in the positive terminal and the vent arrangement in the negative terminal.

5. A method of initiating side wall rupture of a battery cell according to Claim 3, **characterized by** the method comprises striking a first element through the positive terminal thereby at least partially obstructing the vent arrangement therein, and striking a second element through the negative terminal thereby at least partially obstructing the vent arrangement therein.

6. A method of initiating side wall rupture of a battery cell according to any preceding claim, **characterized in that** the force application machine comprises a hydraulic cylinder.

7. A method of initiating side wall rupture of a battery cell according to any preceding claim, **characterized by** the maximum speed and force of the striking element being limited in order to puncture the battery cell in a controllable manner.

8. A method of initiating side wall rupture of a battery cell according to any preceding claim, **characterized in that** the depth the striking element penetrates into the battery cell is limited to less than the distance between the positive and negative terminals, preferably about 2/3 of the distance, so as to limit energy usage.

9. A method of initiating side wall rupture of a battery cell according to any preceding claim, **characterized in that** the striking element is sufficiently rigid so as to not to deform substantially during striking or penetration.

10. A method of initiating side wall rupture of a battery cell according to any preceding claim, **characterized in that** the vent arrangement comprises a plurality of vents, partly defined by vent casing, and striking the element through the vent casing.

11. A method of initiating side wall rupture of a battery cell according to Claim 10, **characterized in that** a line joining the plurality of vents defines an area, and the method comprises striking the element inside or on the circumference of the area, so as to obstruct the vent arrangement.

12. A method of initiating side wall rupture of a battery cell according to any preceding claim, **characterized in that** the ratio of a characteristic diameter of the battery cell to an effective diameter of the vent area is in the range of 1 to 4, in particular 1 to 2, in particular 1.8
and/or that the ratio of an effective diameter of the vent area to a diameter of the striking element is in the range of 1 to 5, in particular 2 to 3, in particular 2.5.

13. A method of initiating side wall rupture of a battery cell according to any preceding claim, **characterized in that** the method comprises providing a striking element in the form of a nail.

14. A method of initiating side wall rupture of a battery cell according to any preceding claim, **characterized in that** the step of providing a battery cell, comprises providing a Lithium-Ion cell

15. A method of initiating side wall rupture of a battery cell according to any preceding claim, **characterized in that** the step of providing a battery cell comprises providing a cylindrical shaped cell, hexahedron shaped cell, or a cuboid shaped cell.
